Europäisches Patentamt

European Patent Office

Office européen des brevets

(19)

(11) Publication number: **0 250 649**
**B1**

(12)

# EUROPEAN PATENT SPECIFICATION

(45) Date of publication of the patent specification:
**13.06.90**

(51) Int. Cl.⁵: **A01D 41/14**

(21) Application number: **86201096.4**

(22) Date of filing: **24.06.86**

---

(54) Header for harvesting machine.

---

(43) Date of publication of application:
**07.01.88 Bulletin 88/1**

(45) Publication of the grant of the patent:
**13.06.90 Bulletin 90/24**

(84) Designated Contracting States:
**DE FR GB IT**

(56) References cited:
**AT-B- 244 665**
**DE-A- 2 550 331**
**DE-A- 3 407 812**
**DE-U- 7 317 878**

(73) Proprietor: FORD NEW HOLLAND, INC. (a Delaware corp.), 500 Diller Avenue, New Holland Pennsylvania 17557(US)

(72) Inventor: Allemeersch, Jozef René Gustaaf, Gisteisteenweg, 201, B-8202 Jabbeke(BE)
Inventor: Carnewal, José Antoine Cyriel Louis, Molenstraat 18, B-9900 Eeklo(BE)
Inventor: Hurlburt, Joseph C., 1829 Wilson Avenue, Lancaster, Pa 17603(US)
Inventor: Maertens, Eric Albert Henri, Pastoriestraat, 228, B-8200 Brugge 2(BE)
Inventor: Slabbinck, Freddy Christian, Kezelbergstraat 7, B-8210 Zedelgem(BE)
Inventor: van Herpe, François, Morelgem 62-2, B-9262 Houtem (Vlierzele)(BE)

(74) Representative: Vandenbroucke, Alberic T.J., FORD NEW HOLLAND N.V. Leon Claeysstraat 3A, B-8210 Zedelgem(BE)

ACTORUM AG

## Description

This invention relates to headers for harvesting machines. Typically, a header for a harvesting machine comprises a cutterbar which is operable to cut standing crop as the machine moves forward. Also a rotatable reel is provided which carries tines which engage the standing crop and sweep it towards the cutterbar for cutting and then carry the cut material towards an auger before releasing it. The auger usually consolidates the cut crop material centrally of the header before it is passed to the body of the machine for processing. The relationship between the cutterbar and the auger is critical and in general depends on the type and condition of the crop to be harvested.

When harvesting down crops, the relationship between the reel, the cutterbar and the auger equally is critical and, in general, the reel should be disposed so that the path described by the outer ends of the tines first enters below the level of the cutterbar forwardly thereof for lifting down crop, then sweeps closely over the cutterbar and finally passes in close proximity along the auger.

Attempts have been made to render the cutterbar adjustable so that the cutterbar/auger relationship can be chosen dependent on the type and condition of the crop to be harvested. In DE-A-976 954 there is disclosed a fore-and-aft adjustable cutterbar, the cutterbar being mounted in guide members forming parts of the opposed side walls of the header. The cutterbar is secured in a selected position by nuts and bolts so that these have to be loosened each time an adjustment is required.

This adjustment procedure is very laborious and also virtually impossible to effect manually. Thus very often the header is dropped to the ground, the securing nuts and bolts loosened, and the body of the machine driven forwards or backwards relative to the cutterbar to adjust the position of the latter. It will be appreciated that fine adjustment of the cutterbar, which is essential, is difficult, if not impossible, by this method. Accordingly, this form of cutterbar adjustment has proved to be impracticable.

In the arrangement according to NL-A-302 349, adjustment of the cutterbar is effected hydraulically by a plurality of hydraulic actuators spaced along the cutterbar. Although the actuators are driven simultaneously, it is extremely difficult to extend or retract the actuators by precisely the same amount, whereby there is a tendency for the cutterbar to twist in a generally horizontal plane and thus become jammed. Furthermore, the vicinity of the cutterbar is extremely dirty due to its proximity to the ground and is thus not the ideal place for hydraulic components.

An alternative proposal for cutterbar adjustment has been made in DE-U 7 317 878 which involves two separately driven spindles at either end of the cutterbar. This arrangement also results in jamming of the cutterbar due to the difficulty of extending or retracting each end by exactly the same amount.

Accordingly, all of the previous attempts to provide a header with an adjustable cutterbar have failed to produce a viable proposition from the standpoint of practicality. It therefore is an objective of the present invention to provide a header with a fore-and-aft adjustable cutterbar which permits easy adjustment of the cutterbar and which eliminates the risks for jamming of this cutterbar during said adjustment.

According to the present invention, there is provided a header for a harvesting machine; said header comprising:

– a transverse frame,
– a transverse cutterbar mounted on the frame by a plurality of pairs of members (and hereinafter referred to in the description as pairs of telescopic or telescoping members), spaced along the width of the cutterbar, each said pair consisting of an outer sleeve member having an inner member axially movable therethrough,
– adjustment means operatively associated with the frame, the pairs of members and the cutterbar for adjusting said cutterbar relative to the frame generally in the direction of the operative travel of the header, and
– ground engaging shoe means provided at the bottom of the header, and characterized in that:
– the outer members of the pairs of members are affixed to the frame and the inner members thereof are attached at one of their ends to the cutterbar at spaced apart locations along the width thereof,
– said shoe means are affixed at one end to the cutterbar and extend back in a rearward direction at a distance below the pairs of members and further also are attached to the inner members of said pairs of members at the other ends thereof which face away from the cutterbar;

the arrangement being such that the cutterbar, the inner members and the shoe means form a rigid structure which is adjustable in said direction relative to the header frame, and the adjustment means comprise separate drive means and synchronizing means which both are operatively coupled between said rigid structure and the header frame; said drive means being operable to move the cutterbar in said direction relative to the header frame and the synchronizing means operating, as a result of the cutterbar being moved relative to the header frame by the drive means, to move the cutterbar by substantially the same amount along its width.

A header for a harvesting machine and constructed in accordance with the present invention will now be described in greater detail, by way of example, with reference to the accompanying drawings, in which:

Figure 1 is a side view, partly in section, of a first embodiment of the invention, and with certain components removed and with the cutterbar in the fully retracted position,

Figure 2 is an enlarged sectional view on the line II–II of Figure 1, showing a portion of the header,

Figure 3 is an enlarged sectional view on the line III–III of Figure 2, again with the cutterbar in the fully retracted position,

Figure 4 is a section on the line IV–IV of Figure 3,

Figure 5 is a view similar to Figure 3 but taken on the line V–V of Figure 2 and again with the cutterbar in the fully retracted position, and

Figure 6 is a partial side view of the header of Figure 1 showing the drive for various components.

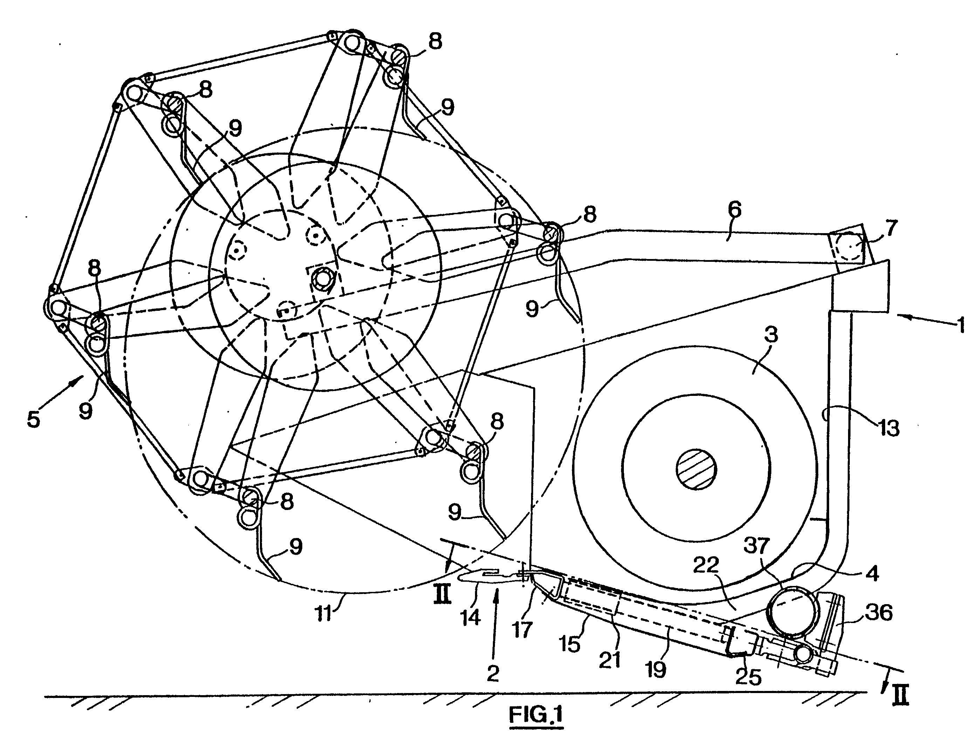

Referring first to Figure 1, the header is basically conventional in that it comprises a frame 1, a cutterbar 2 mounted on the frame, an auger 3 mounted in an auger trough 4, and a reel 5 mounted for rotation between the forward ends of a pair of reel arms 6, the other ends of which are pivotally attached at 7 to the frame 1 in order that the reel can be raised and lowered by hydraulic actuators 10 (Figure 7) which act between the arms and the frame. The reel 5 carries tine bars 8 fitted with tines 9 which are arranged to maintain a fixed orientation as the reel rotates, in a conventional manner. The outer tips of the tines 9 describe a circular path 11 and, when the header is operating in down crops, the reel 5 is positioned as close as possible to the cutterbar 2 in order to optimise the cooperation between the reel and cutterbar. More specifically the arrangement is such that the tine path 11 extends as close as possible to the ground forwardly of the cutterbar 2 to lift down crop for presenting it to the cutterbar 2 for cutting, and whereafter it is swept rearwardly over the cutterbar 2 to pass it to the auger 3 for consolidation centrally of the machine for passage through a central opening 12 (not seen in the drawings) in the rear wall 13 of the header for processing by the harvesting machine (not shown) to which the header is, in use, fitted.

Depending on the nature and condition of the crop to be harvested, the cutterbar 2 has to be adjusted relative to the auger 3. In accordance with the present invention, the cutterbar is adjustable in a generally fore-and-aft direction of the machine for which the header is intended.

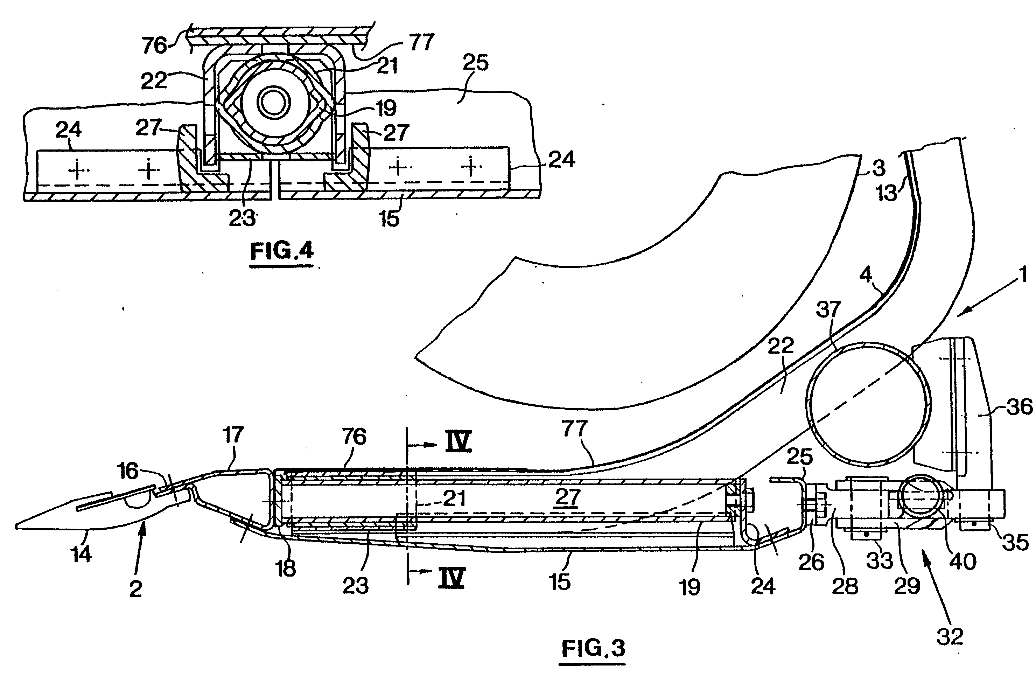

The cutterbar 2 comprises a plurality of knife guards 14 which are bolted on a flange 16 of a hollow transverse beam 17, as best seen in Figure 3. Attached to the rear face of the beam 17 at spaced intervals therealong, via plates 18, are a plurality of inner ones 19 of pairs of telescopic members 19, 21, the outer members 21 being attached to respective curvilinear frame members 22. The frame members 22 are of inverted U-section with this section being closed by plates 23 (Figure 4) at the portions attached to the outer telescopic members 21. The pairs of telescopic members 19, 21 have a cross-sectional shape in the general form of a lemon (as seen in Figure 4) these being readily available components having the necessary structural strength and sliding characteristics but components of other cross-sectional shape may of course be employed. It will be seen from Figure 3 that the telescopic members 19, 21 are not co-extensive, the inner members 19 extending beyond the outer members 21 and being connected at their rear ends to generally L-shaped brackets 24 which themselves extend between and are connected to adjacent ends of the rear edges 25 of shoes 15. Individual shoes 15 extend inbetween adjacent pairs of telescoping members 19, 21. These shoes 15 are secured to the beam 17 of the cutterbar 2 at their forward edges and have rear edges which are turned up to form U-channels 25 for reinforcing said shoes.

Depending on the width of the header, preferably three or five shoes 15 are provided, which means that also four, respectively six pairs of telescoping members 19, 21 are provided. The shoes 15 together form a ground contacting surface for the header which extends substantially across the full width thereof, the facing edges of the individual shoes 15 being positioned generally at the location of the corresponding telescoping members 19, 21. The cutterbar 2, with the beam 17, the inner telescoping members 19, the L-shaped brackets 24 and the shoes 15 together thus form a rigid structure which is fore-and-aft adjustable relative to the header auger 3.

Reinforcing profile members 20 and 30 are welded to the upper surface of each shoe 15; the member 20 extending generally parallel to the corresponding U-channel 25 and the member 30 extending generally in the fore-and-aft direction between the respective U-channel 25 and the corresponding transverse member 20 generally midway of the width of the shoe 15.

The bottom of each U-channel 25 carries a bracket 26 generally in alignment with the corresponding reinforcing member 30. Reinforcing L-shaped ribs 27 are provided on the upper surface of the shoes 15 and are disposed to slidingly engage with the lower edges of the U-shaped frame members 22 when the shoes 15 are deformed slightly under the weight of the header when supported on the ground. Said L-shaped ribs 27 further also have a sealing function to prevent the ingress of dirt into the space above the shoes 15.

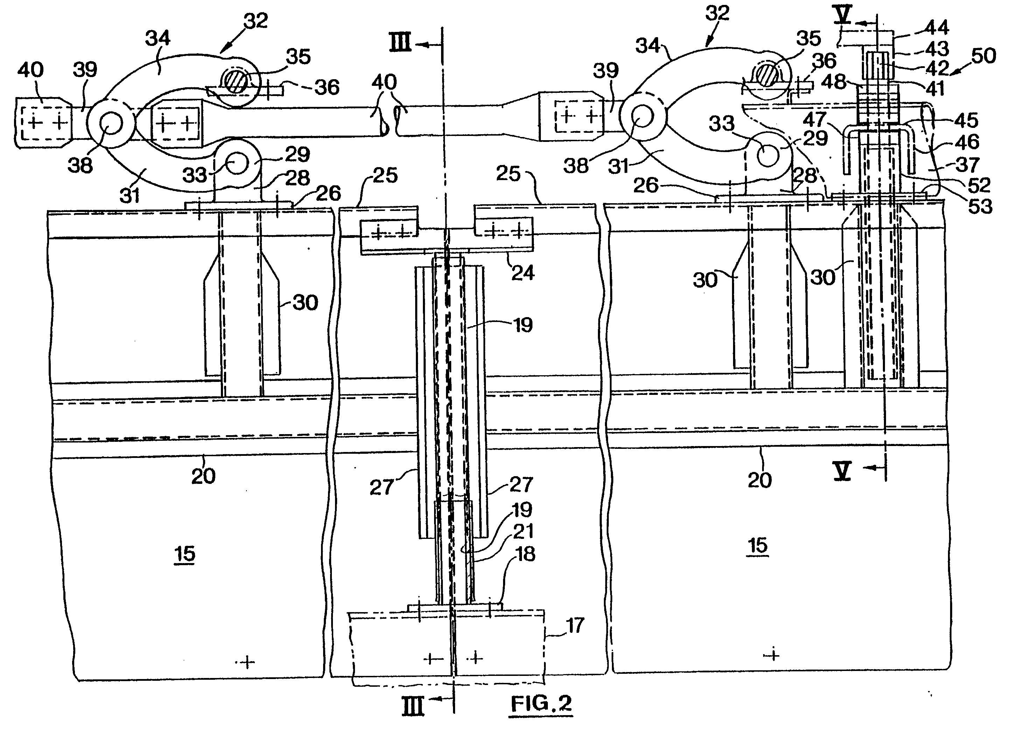

Each bracket 26 carries a lug 28 which is received between the bifurcated end 29 of one half or limb 31 of a wishbone-shaped linkage 32 as best seen in Figure 2, the linkage 32 acting as actuating means for fore-and-aft adjustment of the cutterbar 2. As one linkage 32 is associated with each shoe 15, there preferably are provided in total respectively three or five such linkages 32 depending on the width of the header. The linkage half 31 is pivotally connected to the bracket 26 by a pivot pin 33, and one end of the other limb or half 34 of the linkage 32 receives a pivot pin 35 which is connected via a bracket 36 to a transverse tubular member 37 forming part of the header frame 1. The two halves 31, 34 of each linkage 32 are pivotally connected together by a pivot pin 38. The adjacent ends of the linkage halves 31, 34 are both bifurcated with the end of half 34 receiving the end of half 31 which in turn receives a flat connecting link 39 through which the pivot pin 38 also passes. Except for the two extreme stirrup links 32 (of which one is seen at the top right of Figure 2), the links 39 extend to either side of the pivot pins 38 to receive the flattened ends of individual tubes 40 which, in combination with the links 39, make up a drive rod which serves to operate all of the linkages 32 simultaneously. It will be remarked that the linkages 32 and the coupling members 39, 40 extending therebetween merely act as adjustment synchronisation means to the extent that these components do not have to take up any vertically oriented forces of any significance such as the weight of e.g. the cutterbar 2 and the shoes 15, which is beneficial for the accuracy of the synchronisation of the adjustment. In other words, this is beneficial to ensure that, during fore-and-aft adjustment, the cutterbar 2 is moved in perfect parallel relationship with its initial position, whereby jamming of the telescoping members 19, 21 is avoided.

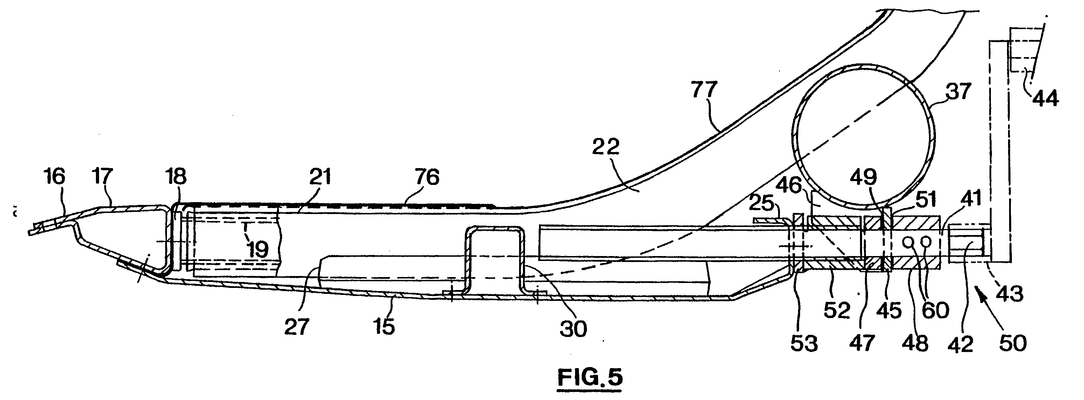

Adjacent one of the end linkages 32, which is seen at the top right of Figure 2, there is mounted a drive mechanism 50 which initiates adjusting movement of the cutterbar 2 relative to the header frame 1. This drive mechanism 50 alternatively may be provided adjacent the middle one of the linkages 32 so as to improve even further the adjustment synchronisation. This drive mechanism 50 is shown in greater detail in Figure 5 and comprises a threaded spindle 41 fitted with an hexagonal head 42 at its outer end for engagement by a correspondingly shaped box spanner 43 fitted to one end of a handle 44. The spindle 41 passes through an aperture in a flange 45 of a bracket 46 attached to the frame tube 37 and is prevented from undergoing axial movement relative to the bracket 46 by two bushes 47 and 48 disposed on either side of the flange 45 and separated by thrust washers 49 and 51. The bush 47 is welded to the spindle 41 and the bush 48 is attached thereto by two bolts or screws 60. The spindle 41 is received by a correspondingly threaded nut 52 which is welded to a flange 53 which in turn is bolted to the bottom wall of the U-channel 25 of the adjacent shoe 15.

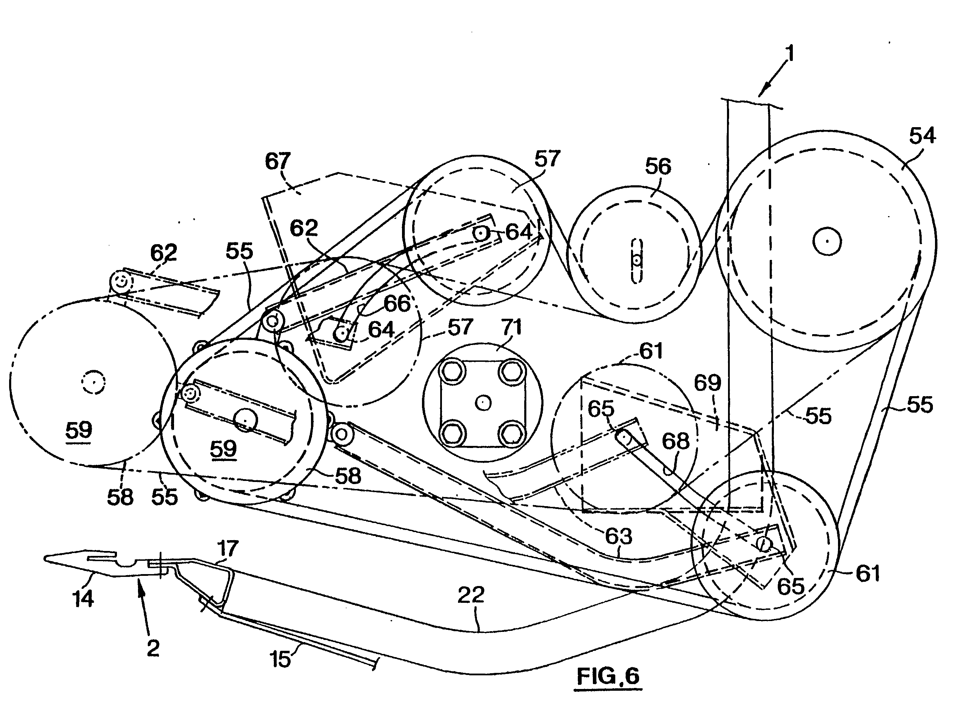

Referring now to Figure 6, the drive for the cutterbar 2 is illustrated and this is a belt drive, whereby it is necessary to make provision in this drive line for movement of the cutterbar when the latter is adjusted. A drive pulley 54 is rotatably mounted on the frame 1 and thus does not move with the cutterbar 2. A belt 55 extends around the drive pulley 54 and around a tension pulley 56, an idler pulley 57, a pulley 58 on a conventional wobble box 59 which converts the rotary drive to a reciprocable drive for the cutterbar 2, and a further idler pulley 61. The wobble box 59 is mounted on the header for movement together with the cutterbar 2 in a fore-and-aft direction relative to the header frame 1. The two idler pulleys 57 and 61 are connected to the wobble box 59 by respective arms 62 and 63, the arms being pivotally connected to both the wobble box and respective stub shafts 64 and 65 of the associated pulleys. The stub shaft 64 of the idler pulley 57 slidably engages a curved slot 66 in a plate 67 attached to a side sheet (not shown) of the header. The stub shaft 65 slidably engages a curved slot 68 provided in a plate 69 also attached to the associated side sheet. Also shown in Figure 6 is a conventional slip clutch 71 for the auger 3 and it is the presence of this component which dictates the arm and slot arrangements (62, 66; 63, 68) which could otherwise be simplified.

The full line position of the components illustrated in Figure 6 is that adopted when the cutterbar 2 is in its fully retracted position, with the idler pulleys 57 and 61, the wobble box 59 and the arms 62 and 63 also being shown in phantom in the fully extended position of the cutterbar 2. It will be seen that the wobble box 59 moves with the cutterbar 2 taking with it the arms 62 and 63, whereby the stub shafts 64 and 65 are pulled along the respective slots 66 and 68, thus moving the idler pulleys 57 and 61 to new positions. It will be seen that the movement of the idler pulleys 57 and 61 is such as to maintain the path length of the belt 55 substantially constant, whereby drive to the cutterbar 2 is not disturbed on cutterbar adjustment.

In operation, the cutterbar 2 is adjusted by taking the handle 44 and engaging the head 42 with the box spanner end 43 of the handle. The handle is then actuated to rotate the spindle 41 in the required direction, according to whether the cutterbar 2 is to be extended or retracted. For present purposes of description, it will be assumed that cutterbar extension is required, whereby the spindle 41 is rotated to move the nut 52 to the left (as seen in Figure 5) and take with it the associated shoe 15 and hence the cutterbar 2 which is attached thereto, the inner members 19 of the telescopic members 19, 21 associated with said shoe sliding within the corresponding outer members 21. Movement of the shoe 15 associated with the drive mechanism 50 in this manner will initially pull apart the halves 31, 34 of the wishbone linkage 32 immediately adjacent the spindle 41. Since the linkage half 34 is pivotally coupled to the fixed frame member 37, separation of the two halves 31, 34 pulls the interconnecting pivot 38 to the right (as seen in Figure 2), whereby the drive rod made up of the links 39 and tubes 40 also is pulled to the right, thus opening all of the other wishbone linkages 32 and thus effecting the same adjustment movement of the corresponding shoes 15 along the entire length of the cutterbar 2 resulting in a corresponding adjustment of the cutterbar 2. It will be appreciated that, on extension of the cutterbar 2 in the fore-and-aft direction of the machine to which the header is fitted, the inner members 19 of the telescopic members 19, 21 are pulled out of the outer members 21. In order to maintain a solid floor to the auger trough 4, plates 76 are attached to the beam 17 which are slidable over plates 77 (Figure 5) attached to the frame 1 and forming the main floor of the auger trough 4.

Preferably these plates 76 are made of resilient sheet material and are shaped and positioned to resiliently engage the plates 77 in overlapping relationship.

As already described, the drive to the cutterbar 2 remains effective during cutterbar adjustment by virtue of the idler pulleys 57 and 61 and arms 62 and 63.

From what precedes, it will be appreciated that the cutterbar adjustment means and the cutterbar supporting means are neatly separated from each other in the sense that the cutterbar adjustment means only serve the cutterbar adjustment function and do not participate in supporting the cutterbar on the header, this being taken care of by the telescopic members. This separation of functions is advantageous for the effectiveness of the adjustment operation. It will also be appreciated that the described embodiment provides the possibility for infinitely adjusting the cutterbar between a fully retracted position and a fully extended position and that the cutterbar automatically is held in any chosen position without the need for providing any fixation means for securing the cutterbar in said position.

It will be understood that changes in the details, which have been described and illustrated to explain the nature of the invention, will occur to and may be made by those skilled in the art upon a reading of this disclosure within the scope of the invention as defined in claim 1. As an example, it will be appreciated that, while the embodiment described herebefore and shown in the drawings enables manual adjustment by means of a spanner 44 from a position immediately behind the header, it will be clear that adjustment may be accomplished by means of e.g. an electric or hydraulic motor coupled to the drive means 50.

Such a motor may be operated from the operator's platform whereby fore-and-aft cutterbar adjustment becomes a mere push button operation which no longer requires the operator to leave his operator's station for making the adjustment.

It further also will be understood that, although in the preferred embodiment shown in Figures 1 to 6, three, respectively five sets of linkages 32 (dependent on the width of the header) are spaced along the transverse dimension of the header, an arrangement with only two such sets of linkages 32, one adjacent each end of the header, in principle equally could provide the advantages of the present invention provided the cutterbar 2 together with the shoes 15 form a sufficiently rigid structure to avoid flexing in the fore-and-aft direction during adjustment. This arrangement with a minimum of two sets of linkages 32 may be combined with either a minimum of two pairs of telescopic members 19, 21 or with a larger number of pairs of such members 19, 21.

Thus the present invention provides a header with a cutterbar which is adjustable generally fore-and-aft of the machine to which the header is fitted, the adjustment being precise and readily effected from one position on the header without any twisting resulting in jamming as experienced with Known arrangements.

## Claims

1. A header for a harvesting machine, said header comprising:
   - a transverse frame (1),
   - a transverse cutterbar (2) mounted on the frame (1) by a plurality of pairs of members (19, 21) spaced along the width of the cutterbar (2), each said pair consisting of an outer sleeve member having an inner member axially movable therethrough,
   - adjustment means (50, 32) operatively associated with the frame (1), the pairs of members (19, 21) and the cutterbar (2) for adjusting said cutterbar (2) relative to the frame (1) generally in the direction of the operative travel of the header, and
   - ground engaging shoe means (15) provided at the bottom of the header, and characterized in that:
   - the outer members (21) of the pairs of members (19, 21) are affixed to the frame (1) and the inner members (19) thereof are attached at one of their ends to the cutterbar (2) at spaced apart locations along the width thereof,
   - said shoe means (15) are affixed at one end to the cutterbar (2) and extend back in a rearward direction at a distance below the pairs of members (19, 21) and further also are attached to the inner members (19) of said pairs of members (19, 21) at the other ends thereof which face away from the cutterbar (2); the arrangement being such that the cutterbar (2), the inner members (19) and the shoe means (15) form a rigid structure which is adjustable in said direction relative to the header frame (1), and the adjustment means (50, 32) comprise separate drive means (50) and synchronizing means (32, 40) which both are operatively coupled between said rigid structure (2, 19, 15) and the header frame (1); said drive means (50) being operable to move the cutterbar (2) in said direction relative to the header frame (1) and the synchronizing means (32, 40) operating, as a result of the cutterbar (2) being moved relative to the header frame (1) by the drive means (50), to move the cutterbar (2) by substantially the same amount along its width.

2. A header according to claim 1, characterized in that the shoe means comprise a plurality of shoes (15), each one of which is provided generally inbetween adjacent pairs of members (19, 21) and is coupled to said other ends of the inner ones (19) of said pairs of members (19, 21) via coupling brackets (26) which further also interconnect adjacent shoes (15).

3. A header according to claim 2, characterized in that the rear edges of the shoes (15) are turned over to provide channels (25) to which are attached the other ends of the inner members (19) by, and which are connected to each other via said brackets (26).

4. A header according to any of the preceding claims, characterized in that the synchronizing means (32, 40) comprise:
   - a plurality of linkages (32) with each linkage (32) being in the form of a wishbone with the two limbs (31, 34) thereof being pivotally connected together; the first limbs (31) of these wishbone linkages (32) being pivotally attached at their outer ends to said rigid structure (2, 19, 15) at spaced apart locations along the transverse width thereof and the other limbs (34) of these wishbone linkages (32) having their outer ends pivotally attached to the header frame (1) again at spaced apart locations along the transverse width thereof, and
   - coupling means (39, 40) interconnecting the wishbone linkages (32) whereby the limbs (31, 34) of all wishbone linkages (32) open and close simultaneously and to the same amount upon the drive means (50) moving the cutterbar (2) relative to the header frame (1) so that the cutterbar (2) is moved by substantially the same amount along its width.

5. A header according to claim 4, characterized in that the synchronizing means (32, 39, 40) comprise two wishbone linkages (32), one adjacent each end of the header.

6. A header according to claim 4, when appended to claim 3 or 4 characterized in that the synchronizing means (32, 39, 40) comprise X number of wishbone linkages (32) and the cutterbar (2) is fore-and-aft adjustably supported on the header frame (1) by X+ 1 number of pairs of members ( 19, 21), each wishbone linkage (32) being situated generally midway between adjacent pairs of members (19, 21) and the first limbs (31) of the wishbone linkages (32) being attached to the corresponding shoes (15) positioned generally inbetween said adjacent pairs of members (19, 21).

7. A header according to any of the claims 4 to 6, characterized in that the limbs (31, 34) of the linkages (32) have:
    – bifurcated outer ends which receive lugs of brackets (28, 36) by which the linkages (32) are attached to said rigid structure (2, 19, 15), respectively the header frame (1), as appropriate; and pivot pins (33, 35) extending through the bifurcated ends and through the lugs, and
    – bifurcated inner ends disposed so that adjacent inner ends of each pair of limbs ( 31, 34) of each linkage (32) receive a common pivot pin (38) and also a link (39) which forms part of the coupling means (39, 40) for the linkages (32).

8. A header according to any of the preceding claims, characterized in that the drive means (50) comprise a spindle (41) rotatably supported in an axially fixed position on the header frame (1) and operatively coupled to said rigid structure (2, 19, 15) for, upon rotation, adjusting said structure (2, 19, 15) in a fore-and-aft direction.

9. A header according to any of the claims 4 to 7, or claim 8 when appended to any of said claims 4 to 7 characterized in that the drive means (50) are provided in the vicinity of one of the linkages (32) and are disposed to act upon said rigid structure (2, 19, 15), the arrangement being such that, upon fore-and-aft adjustment of said rigid structure (2, 19, 15) by actuation of the drive means (50), substantially the same adjustment is transmitted by the synchronizing means (32, 39, 40) to said rigid structure (2, 19, 15) and hence to the cutterbar (2) along its entire transverse dimension.

10. A header according to any one of the preceding claims characterized in that a plate (76) extends from the cutterbar (2) back in a rearward direction in overlapping relationship with a floor portion (77) on the fixed part of the header to maintain a solid header floor (76, 77) irrespective of the relative position of the cutterbar (2) to the header frame (1).

11. A header according to any one of the preceding claims characterized in that the cutterbar (2) is of the reciprocatory type and is driven by a wobble box (59) which is movable with the cutterbar (2) and in turn is driven by a belt drive; the belt (55) extending around a drive pulley (54) and two idler pulleys (57, 61), each of which is movable with the cutterbar (2) on adjustment of the latter in order to maintain substantially constant the path length of the belt (55) for all adjusted positions of the cutterbar (2).

12. A header according to any one of the preceding claims characterized in that the adjustment means (50, 32) comprise a power source which can be operated from the operator's station of the harvesting machine for making the cutterbar adjustment.

**Patentansprüche**

1. Schneidtisch für eine Erntemaschine, mit:
    – einem quer angeordneten Rahmen (1),
    – einem quer angeordneten Messerbalken (2), der an dem Rahmen (1) über eine Mehrzahl von Paaren von Bauteilen (19, 21) befestigt ist, die entlang der Breite des Messerbalkens (2) mit Abstand voneinander angeordnet sind, wobei jedes Paar aus einem äußeren Hülsenteil besteht, durch das hindurch ein Innenteil axial beweglich ist,
    – Einstelleinrichtungen (50, 32), die betriebsmäßig dem Rahmen (1), den Paaren von Bauteilen (19, 21) und dem Messerbalken (12) zugeordnet sind, um den Messerbalken (2) gegenüber dem Rahmen (1) allgemein in Richtung der Betriebsbewegung des Schneidtisches einzustellen, und
    – mit dem Boden in Eingriff kommende Kufenteile (15), die am Boden des Schneidtisches vorgesehen sind, dadurch gekennzeichnet, daß:
    – die Außenteile (21) der Paare von Bauteilen (19, 21) an dem Rahmen (1) befestigt sind, während deren Innenteile (19) mit einem ihrer Enden an dem Messerbalken (2) an mit Abstand angeordneten Stellen entlang dessen Breite befestigt sind,
    – die Kufeneinrichtungen (15) mit einem Ende an dem Messerbalken (2) befestigt sind und sich in einer Rückwärtsrichtung zurück unter einem Abstand unter den Paaren von Bauteilen (19, 21) erstrecken und weiterhin an den Innenteilen (19) der Paare von Bauteilen (19, 21) an deren anderen Enden befestigt sind, die von dem Messerbalken (2) fortgerichtet sind, wobei die Anordnung derart ist, daß der Messerbalken (2), die Innenteile (19) und die Kufeneinrichtungen (15) eine starre Struktur bilden, die in der genannten Richtung gegenüber dem Schneidtisch-Rahmen (1) einstellbar ist, und
    – die Einstelleinrichtungen (50, 32) getrennte Antriebseinrichtungen (50) und Synchronisationseinrichtungen (32, 40) umfassen, die beide betriebsmäßig zwischen der genannten starren Struktur (2, 19, 15) und dem Schneidtisch-Rahmen (1) angeschlossen sind, wobei die Antriebseinrichtungen (50) betätigbar sind, um den Messerbalken (2) in der genannten Richtung gegenüber dem Schneidtisch-Rahmen (1) zu bewegen und die Synchronisiereinrichtungen (32, 40) als Ergebnis der von den Antriebseinrichtungen (50) hervorgerufenen Bewegung des Messerbalkens (2) gegenüber dem Schneidtisch-Rahmen (1) eine Bewegung des Messerbalkens (2) im wesentlichen über den gleichen Betrag entlang seiner Breite bewirken.

2. Schneidtisch nach Anspruch 1, dadurch gekennzeichnet, daß die Kufeneinrichtungen eine Mehrzahl von Kufen (15) umfassen, von denen jede allgemein zwischen benachbarten Paaren von Bauteilen (19, 21) vorgesehen ist und mit den genannten anderen Enden der Innenteile (19) der Paare von Bauteilen (19, 21) über Verbindungs-Haltebügel (26) gekoppelt ist, die weiterhin benachbarte Kufen miteinander verbinden.

3. Schneidtisch nach Anspruch 2, dadurch gekennzeichnet, daß die Hinterkanten der Kufen (16) umgebogen sind, um Kanäle (25) zu bilden, an denen die anderen Enden der Innenteile (19) durch die Haltebügel (26) befestigt sind und die miteinander über die Haltebügel (26) verbunden sind.

4. Schneidtisch nach einem der vorhergehenden Ansprüche, dadurch gekennzeichnet, daß die Synchronisationseinrichtungen (32, 40) folgende Teile umfassen.

– eine Mehrzahl von Gestängen (32), die jeweils die Form eines V mit gelenkig verbundenen Schenkeln aufweisen, wobei die beiden Schenkel (31, 34) schwenkbar miteinander verbunden sind und die ersten Schenkel (31) dieser Gestänge (32) an ihren äußeren Enden schwenkbar an der starren Struktur (2, 19, 15) an mit Abstand voneinander angeordneten Stellen entlang deren Querbreite befestigt sind, während die anderen Schenkel (34) dieser Gestänge (32) mit ihren äußeren Enden schwenkbar an dem Schneidtisch-Rahmen (1) wiederum an mit Abstand voneinander angeordneten Stellen entlang dessen Querbreite befestigt sind und

– Kupplungseinrichtungen (39, 40), die die V-Gestänge (32) miteinander verbinden, sodaß sich die Schenkel (31, 34) aller V-Gestänge (32) gleichzeitig und im gleichen Ausmaß öffnen und schließen, wenn die Antriebseinrichtungen (50) den Messerbalken (2) gegenüber dem Schneidtisch-Rahmen (1) bewegen, sodaß der Messerbalken (2) entlang seiner Breite im wesentlichen über den gleichen Betrag bewegt wird.

5. Schneidtisch nach Anspruch 4, dadurch gekennzeichnet, daß die Synchronisationseinrichtungen (32, 39, 40) zwei V-Gestänge (32), eines benachbart zu jedem Ende des Schneidtisches, umfassen.

6. Schneidtisch nach Anspruch 4 unter Rückbeziehung auf Anspruch 3 oder 4, dadurch gekennzeichnet, daß die Synchronisationseinrichtungen (32, 39, 40) eine Anzahl X von V-Gestängen (32) umfassen und der Messerbalken (2) in Längsrichtung einstellbar an dem Schneidtischrahmen (1) über eine Anzahl von X+1 Paaren von Bauteilen (19, 21) gehaltert ist, daß jedes V-Gestänge (32) allgemein in der Mitte zwischen benachbarten Paaren von Bauteilen (19, 21) liegt und daß die ersten Schenkel (31) der V-Gestänge (32) an den entsprechenden Kufen (15) befestigt sind, die allgemein zwischen den benachbarten Paaren von Bauteilen (19, 21) gelegen sind.

7. Schneidtisch nach einem der Ansprüche 4 bis 6, dadurch gekennzeichnet, daß die Schenkel (31, 34) der Gestänge (32)

– gegabelte äußere Enden aufweisen, die Laschen von Haltebügeln (28, 36) aufnehmen, über die die Gestänge (32) an der starren Struktur (2, 19, 15) bzw. dem Schneidtisch-Rahmen (1) in geeigneter Weise befestigt sind, wobei sich Schwenkstifte (33, 35) durch die gegabelten Enden und durch die Laschen hindurcherstrecken und

– gegabelte innere Enden aufweisen, die derart angeordnet sind, daß benachbarte innere Enden jedes Paares von Schenkeln (31, 34) jedes Gestänges (32) einen gemeinsamen Schwenkzapfen (38) und weiterhin ein Verbindungsglied (39) aufnehmen, das einen Teil der Kupplungseinrichtungen (39, 40) für die Gestänge (32) bildet.

8. Schneidtisch nach einem der vorhergehenden Ansprüche, dadurch gekennzeichnet, daß die Antriebseinrichtungen (50) eine Spindel (41) umfassen, die drehbar in einer axial festgelegten Position auf dem Schneidtisch-Rahmen (1) gelagert und betriebsmäßig mit der starren Struktur (12, 19, 15) gekoppelt ist, um bei einer Drehung die Struktur (2, 19, 15) in einer Längsrichtung einzustellen.

9. Schneidtisch nach einem der Ansprüche 4 bis 7 oder 8 unter Rückbeziehung auf einen der Ansprüche 4 bis 7, dadurch gekennzeichnet, daß die Antriebseinrichtungen (50) in der Nähe eines der Gestänge (32) vorgesehen und derart angeordnet sind, daß sie auf die starre Struktur (2, 19, 15) einwirken, wobei die Anordnung derart ist, daß bei einer Einstellung der starren Struktur (2, 19, 15) in Längsrichtung durch Betätigung der Antriebseinrichtungen (50) im wesentlichen die gleiche Einstellung durch die Synchronisationseinrichtungen (32, 39, 40) auf die starre Struktur (2, 19, 15) und damit auf den Messerbalken (2) entlang seiner gesamten Querabmessung übertragen wird.

10. Schneidtisch nach einem der vorhergehenden Ansprüche, dadurch gekennzeichnet, daß sich eine Platte (76) von dem Messerbalken (2) in einer Rückwärtsrichtung zurück in überlappender Beziehung mit einem Bodenteil (77) auf dem festen Teil des Schneidtisches erstreckt, um einen geschlossenen Schneidtischboden (76, 77) unabhängig von der Relativposition des Messerbalkens (2) und des Schneidtisch-Rahmens (1) aufrechtzuerhalten.

11. Schneidtisch nach einem der vorhergehenden Ansprüche, dadurch gekennzeichnet, daß der Messerbalken (2) vom hin- und hergehenden Typ ist und über ein Taumelscheibengetriebe (59) angetrieben wird, das mit dem Messerbalken (2) beweglich ist und seinerseits über einen Riemenantrieb angetrieben ist, und daß sich der Riemen (55) um eine Antriebsriemenscheibe (54) und zwei Leerlaufriemenscheiben (57, 61) erstreckt, die jeweils mit dem Messerbalken (2) bei einer Einstellung des letzteren beweglich sind, um die Weglänge des Riemens (55) für alle Einstellpositionen des Messerbalkens (2) im wesentlichen konstant zu halten.

12. Schneidtisch nach einem der vorhergehenden Ansprüche, dadurch gekennzeichnet, daß die Einstelleinrichtungen (50, 32) eine Leistungsquelle umfassen, die von der Bedienungsstation der Erntemaschine betätigbar ist, um die Einstellung des Messerbalkens durchzuführen.

## Revendications

1. Bec cueilleur pour une récolteuse, comportant:
- un châssis transversal (1),
- une barre de coupe transversale (2) montée sur le châssis (1) au moyen de plusieurs paires d'organes (19, 21) espacés sur toute la largeur de la barre de coupe (2), chacune desdites paires consistant en un organe formant manchon extérieur pourvu d'un organe intérieur mobile axialement à travers lui,
- des moyens d'ajustement (50, 32) associés d'une manière fonctionnelle au châssis (1), aux paires d'organes (19, 21) et à la barre de coupe (2) pour ajuster celle-ci par rapport au châssis (1), d'une manière générale, dans la direction du déplacement fonctionnel du bec cueilleur, et
- des moyens formant patins de contact avec le sol (15) prévus au niveau de la partie inférieure du bec cueilleur, et caractérisé en ce que:
- les organes extérieurs (21) des paires d'organes (19, 21) sont fixés au châssis (1), tandis que leurs organes intérieurs (19) sont reliés, au niveau de leurs premières extrémités, à la barre de coupe (2) en des points espacés les uns des autres sur toute la largeur de celle-ci;
- lesdits moyens formant patins (15) sont fixés, au niveau de l'une de leurs extrémités, à la barre de coupe (2), et s'étendent dans une direction orientée vers l'arrière à une certaine distance au-dessous des paires d'organes (19, 21), en étant également reliés aux organes intérieurs (19) desdites paires d'organes (19, 21) au niveau des secondes extrémités de ceux-ci tournées à l'opposé de la barrre de coupe (2); la conception étant telle que la barre de coupe (2), les organes intérieurs (19) et les moyens formant patins (15) définissent une structure rigide qui peut être ajustée dans ladite direction par rapport au châssis de bec cueilleur (1), et en ce que
- les moyens d'ajustement (50, 32) comportent des moyens d'entraînement (50) et des moyens de synchronisation (32, 40) séparés qui sont tous montés d'une manière fonctionnellle entre ladite structure rigide (2, 19, 15) et le châssis de bec cueilleur (1); lesdits moyens d'entraînement (50) étant aptes à opérer pour déplacer la barre de coupe (2) dans ladite direction par rapport au châssis de bec ceuilleur (1), tandis que les moyens de synchronisation (32, 40) interviennent pour, par suite du déplacement, par les moyens d'entraînement (50), de la barre de coupe (2) par rapport au châssis de bec cueilleur (1), déplacer celle-ci de sensiblement la même distance sur toute sa largeur.

2. Bec cueilleur selon la revendication 1, caractérisé en ce que les moyens formant patins comportent plusieurs patins (15) respectivement prévus, d'une manière générale, entre des paires d'organes (19, 21) adjacentes et accouplés avec lesdites secondes extrémités des organes intérieurs (19) desdites paires d'organes (19, 21) par l'intermédiaire de pattes d'accouplement (26) qui relient également entre eux des patins (15) adjacents.

3. Bec cueilleur selon la revendication 2, caractérisé en ce que les bords arrière des patins (15) sont repliés pour définir des éléments en U (25) auxquels les secondes extrémités des organes intérieurs (19) sont rattachées au moyens desdites pattes (26) et qui sont reliés les uns aux autres par l'intermédiaire de ces dernières.

4. Bec cueilleur selon l'une quelconque des revendications précédentes, caractérisé en ce que les moyens de synchronisation (32, 40) comportent:
- plusieurs tringleries (32) qui se présentent respectivement sous la forme d'un levier triangulaire dont les deux branches (31, 34) sont reliées entre elles d'une manière pivotante; les premières branches (31) de ces tringleries formant leviers triangulaires (32) étant, au niveau de leurs extrémités extérieures, accouplées à pivotement avec ladite structure rigide (2, 19, 15) en des points espacés les uns des autres sur toute la largeur transversale de celle-ci, tandis que les autres branches (34) de ces tringleries formant leviers triangulaires (32) ont leur extrémités extérieures rattachées à pivotement au châssis de bec cueilleur (1), là aussi, en des points espacés les uns des autres sur toute la largeur transversale de celui-ci, et
- des moyens d'accouplement (39, 40) qui relient entre elles les tringleries formant leviers triangulaires (32), moyennant quoi, les branches (31, 34) de toutes les tringleries formant leviers triangulaires (32) s'ouvrent et se ferment simultanément et avec la même amplitude, lorsque les moyens d'entraînement (50) déplacent la barre de coupe (2) par rapport au châssis de bec cueilleur (1), si bien que la barre de coupe est déplacée de sensiblement la même distance sur toute sa largeur.

5. Bec cueilleur selon la revendication 4, caractérisé en ce que les moyens de synchronisation (32, 39, 40) comportent deux tringleries formant leviers triangulaires (32) respectivement situées à proximité de chacune des extrémités du bec cueilleur.

6. Bec cueilleur selon la revendication 4, lorsqu'elle est dépendante de la revendication 3 ou 4, caractérisé en ce que les moyens de synchronisation (32, 39, 40) comportent un nombre de tringleries formant leviers triangulaires (32) égal à X, tandis que la barre de coupe (2) est montée d'une manière réglable longitudinalement sur le châssis de bec cueilleur (1) au moyen d'un nombre de paires d'organes (19, 21) égal à X+1; chacune des tringleries formant leviers triangulaires (32) étant située, dans l'ensemble, à mi-chemin entre des paires d'organes (19, 21) adjacentes, et les premières branches (31) des tringleries formant leviers triangulaires (32) étant reliées aux patins (15) correspondants intercalés, d'une manière générale, entre lesdites paires d'organes (19, 21) adjacentes.

7. Bec cueilleur selon l'une quelconque des revendications 4 à 6, caractérisé en ce que les branches (31, 34) des tringleries (32) possèdent:
- des extrémités extérieures bifurquées qui reçoivent des oreilles de pattes (28, 36) à l'aide desquelles les tringleries (32) sont reliées à ladite structure rigide (2, 19, 15), respectivement au châssis de bec cueilleur (1), comme il convient; et des axes de pivotement (33, 35) qui s'étendent à travers les extrémités bifurquées et les oreilles, et

– des extrémités intérieures bifurquées disposées de façon que des extrémités intérieures ad-jacentes de chaque paire de branches (31, 34) des tringleries (32) respectives reçoive un axe de pivotement (38) commun et également une pièce de liaison (39) qui fait partie des moyens d'accouplement (39, 40) destinés aux tringleries (32).

8. Bec cueilleur selon l'une quelconque des revendications précédentes, caractérisé en ce que les moyens d'entraînement (50) comportent une broche (41) montée mobile en rotation dans une position fixe axialement sur le châssis de bec cueilleur (1) et accouplée d'une manière fonctionnelle avec ladite structure rigide (2, 19, 15) pour, en tournant, ajuster ladite structure (2, 19, 15) dans une direction longitudinale.

9. Bec cueilleur selon l'une quelconque des revendications 4 à 7, ou la revendication 8, lorsqu'elle est dépendante de l'une quelconque desdites revendications 4 à 7, caractérisé en ce que les moyens d'entraînement (50) sont prévus à proximité de l'une des tringleries (32) et disposés pour agir sur ladite structure rigide (2, 19, 15); la conception étant telle que, lors d'un ajustement longitudinal de ladite structure rigide (2, 19, 15) dû à un actionnement des moyens d'entraînement (50), les moyens de synchronisation (32, 39, 40) transmettent sensiblement le même ajustement à ladite structure rigide (2, 19, 15) et, par conséquent, à la barre de coupe (2) sur la totalité de sa dimension transversale.

10. Bec cueilleur selon l'une quelconque des revendications précédentes, caractérisé en ce qu'une plaque (76) s'étend depuis la barre de coupe (2), suivant une direction orientée vers l'arrière, dans une relation de chevauchement avec une portion de fond (77) prévue sur la partie fixe du bec cueilleur, afin de conserver un fond de bec cueilleur continu (76, 77), indépendamment de la position relative de la barre de coupe (2) vis-à-vis du châssis de bec cueilleur (1).

11. Bec cueilleur selon l'une quelconque des revendications précédentes, caractérisé en ce que la barre de coupe (2) est du type à mouvement alternatif, et entraînée par une boîte de nutation (59) apte à être déplacée avec la barre de coupe (2) et elle-même commandée par un entraînement à courroie; la courroie (55) s'étendant autour d'une poulie menante (54) et de deux poulies folles (57, 61) dont chacune est déplaçable conjointement avec la varre de coupe (2), lors d'un ajustement de cette dernière, afin de maintenir sensiblement constante la longueur de la trajectoire de la courroie (55) pour toutes les positions d'ajustement de la barre de coupe (2).

12. Bec cueilleur selon l'une quelconque des revendications précédentes, caractérisé en ce que les moyens d'ajustement (50, 32) comportent une source d'énergie qui peut être commandée depuis le poste de conduite de la récolteuse, en vue d'effectuer l'ajustement de barre de coupe.

**FIG.1**

EP 0 250 649 B1

FIG.2

EP 0 250 649 B1

FIG.3

FIG.4

**FIG.5**

**FIG.6**

EP 0 250 649 B1